# EUROPEAN PATENT SPECIFICATION

(11) **EP 3 274 149 B1**
(45) Date of publication and mention of the grant of the patent: **13.03.2019**
(21) Application number: 16714007.8
(22) Date of filing: 16.03.2016
(51) Int. Cl.: B29C 45/40, B29C 45/73

(54) **PART EJECTION SYSTEM FOR INJECTION MOLDING APPARATUS**
TEILEAUSSTOSSSYSTEM FÜR SPRITZGIESSVORRICHTUNG
SYSTÈME D'ÉJECTION DE PIÈCE POUR APPAREIL DE MOULAGE PAR INJECTION

(30) Priority: 23.03.2015 US 201562136699 P
(43) Date of publication of application: 31.01.2018
(73) Proprietor: SABIC Global Technologies B.V., 4612 PX Bergen op Zoom (NL)
(72) Inventor: PARK, Hyemin, SungNam Gyeonggi-do 461-824 (KR); CHOI, Jong-Min, SungNam Gyeonggi-do 461-824 (KR)
(74) Representative: Balder IP Law, S.L.
(86) International application number: PCT/IB2016/051485
(87) International publication number: WO 2016/151437

(56) References cited:
- DE-A1- 19 749 149
- JP-A- H02 243 318
- JP-B1- 4 047 917
- US-A- 3 899 282
- US-A- 3 993 787
- US-A- 6 056 535

## Description

### BACKGROUND

An injection molding apparatus can include a stationary half (A side) and a moving half (B side). These sections can be brought together by relative movement of the two sections. When together, molding surfaces from either section can combine to form a part forming mold cavity. A series of passages can convey movable molding material (e.g., material which is molten or at a temperature greater than its glass transition temperature), also referred to as the shot, from the injection machine to the mold cavity. A sprue passage can be in fluid communication with a runner, which can convey the shot through a gate and into the part forming mold cavity. Multiple runners can extend from a sprue to convey the shot to multiple part forming mold cavities.

The runner can be a "hot runner" heated to maintain the temperature of material within the runner such that the material does not solidify (or become more viscous such as to interrupt subsequent shot flow) between shot to shot and during the injection cycle. The runner can be a "cold runner" where material within the runner is cooled during the injection cycles. In the cold runner system the runner can remain attached to the part when the part is ejected from the part forming mold cavity between injection cycles. Advantages and disadvantages of each runner design will be known to those skilled in the art. Known injection molding apparatuses can be found for example in the following disclosures: US 3 899 282 A, JP H02 243318 A, JP 4 047917 B1, US 3 993 787 A.

### BRIEF DESCRIPTION

Disclosed herein is an injection molding apparatus and a method of forming a part in an injection mold.

An injection molding apparatus includes: a stationary half comprising: a sprue opening extending through a thickness of the stationary half forming a sprue passage; a stationary half mold surface; and an ejection block cavity disposed adjacent to the sprue opening; a moving half disposed opposite the stationary half and comprising an moving half mold surface, wherein the stationary half mold surface and the moving half mold surface face one another; a presser in mechanical communication with, and configured to move, the stationary half, the moving half, or both together to form a molding cavity between the stationary half mold surface and the moving half mold surface; an ejection block comprising a mold contact surface forming a portion of the stationary half mold surface, wherein at least a portion of the ejection block is disposed within the ejection block cavity, and wherein the ejection block is configured to movably fit within the ejection block cavity; and an injector for introducing a material to be molded through the sprue passage and into the molding cavity; and a cooling system in thermal communication with at least one of the stationary half mold surface and the moving half mold surface for cooling the material during or after it is introduced into the molding cavity.

A method for forming a part in an injection mold includes: heating a polymer material to a temperature greater than or equal to a polymer glass transition temperature; injecting the polymer material into the injection molding apparatus of any of the preceding claims while pressing together the stationary half mold surface and the moving half mold surface to form the molding cavity; cooling a surface of the molding cavity with the cooling system; separating the stationary half mold surface and the moving half mold surface; and moving the ejection block relative to the stationary half thereby pushing the part away from the stationary half molding surface and ejecting the part from the injection molding apparatus.

The above described and other features are exemplified by the following figures and detailed description.

### BRIEF DESCRIPTION OF THE DRAWINGS

Refer now to the figures, which are exemplary embodiments, and wherein the like elements are numbered alike.
FIG. 1 is an illustration of a stationary half and a moving half of an injection molding tool and a part formed therebetween.
FIG. 2 is an illustration of the injection molding tool of FIG. 1 in a closed position.
FIG. 3 is an illustration of a portion of the injection molding tool of FIG. 2.
FIG. 4 is an illustration of an injection molding tool having an ejection block in the closed position.
FIG. 5 is an illustration of the molding tool of FIG. 4 as the tool is opening.
FIG. 6 is an illustration of an ejector plate with a converging undercut adjacent an ejector pin tip end.
FIG. 7 is an illustration of an ejector pin tip end with a zig-zag undercut.
FIG. 8 is an illustration of an ejector pin tip end with a notched undercut.
FIG. 9 is an illustration of an ejector plate with a diverging undercut adjacent an ejector pin tip end.
FIG. 10 is an illustration of a part formed in the injection tool of FIGs. 1-3.
FIG. 11 is a cross-sectional view of the part of FIG. 10 along the A-A cross section.
FIG. 12 is an illustration of a portion of part of FIG. 11.
FIG. 13 is an illustration of the part of FIGs. 10-12 in a three dimensional space.
FIG. 14 is an illustration of a part formed in the injection tool of FIGs. 1-3.
FIG. 15 is an illustration of a sprue used in forming the part of FIG. 14.
FIG. 16 is another illustration of a portion of part of FIG. 11.
FIG. 17 is another illustration of a portion of part of FIG. 11.

### DETAILED DESCRIPTION

An advantage of a cold runner injection molding apparatus can include simpler design in comparison to injection molding tools which have hot runners. For example, a cold runner system can have fewer parts and can be free of heated components (e.g., manifolds, nozzles, passages, resistive heaters, or the like) which, when used in a hot runner system, can be disposed internally to a section of the tool. Thus, cold runner mold tools can be less expensive to design and build. However, in cold runner systems the cycle time can be longer, attributed, at least in part, to the runner volume which can increase the shot weight, increase the part volume and cool time accordingly, and can increase the distance that the shot must travel to fill the part cavity. Additionally, the runner of a cold runner system can represent a process waste stream which can require additional handling, storage, processing, and the like, even when the runner is recycled. It can be desirable to design a cold runner injection molding apparatus with a reduced cycle time, but without the cost associated with a hot runner system. Additionally, it can be desirable to reduce the amount of taper from one end of the sprue to the other, e.g., from the runner to the mold surface, to reduce the cross-sectional width of the sprue, to reduce cooling time. If an ejection block is utilized, the angle can be reduced since the ejection block can apply pressure to push the sprue from the stationary half of the mold while also pulling it from the moving half as compared to a mold where, when opening, the sprue is only pulled from the moving half.

Disclosed herein is an injection molding apparatus that can reduce molding cycle time by ejecting a part prior to complete cooling of the runner. For example, with the injection molding apparatus disclosed herein, a part made from the injection molding apparatus can be ejected from the injection mold when overall cooling of the part is at a level of less than 80%, for example, less than 70%, for example, less than 60%. The injection molding apparatus can be a cold runner injection molding apparatus.

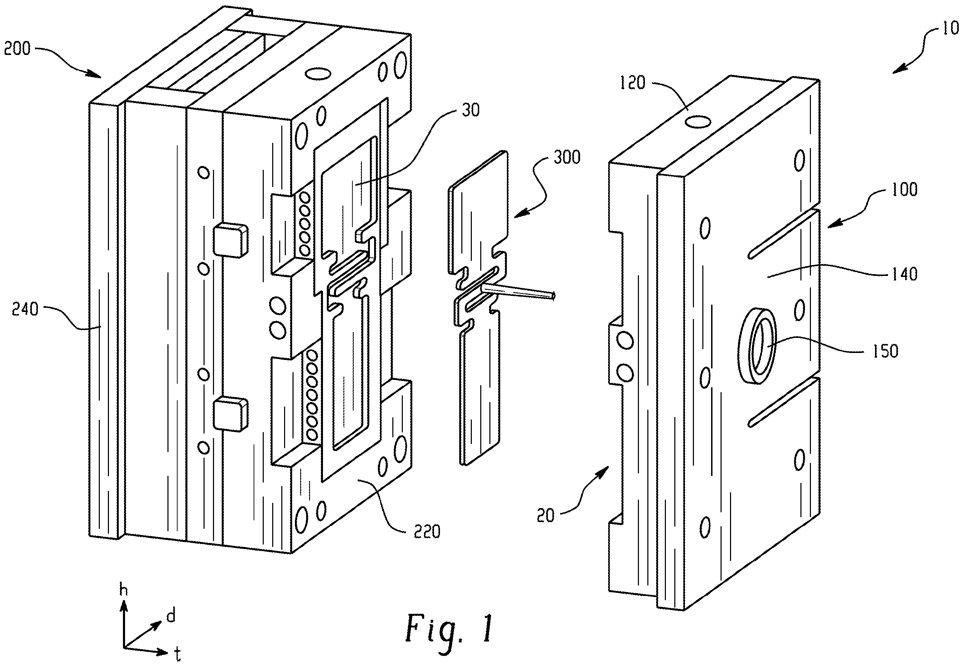

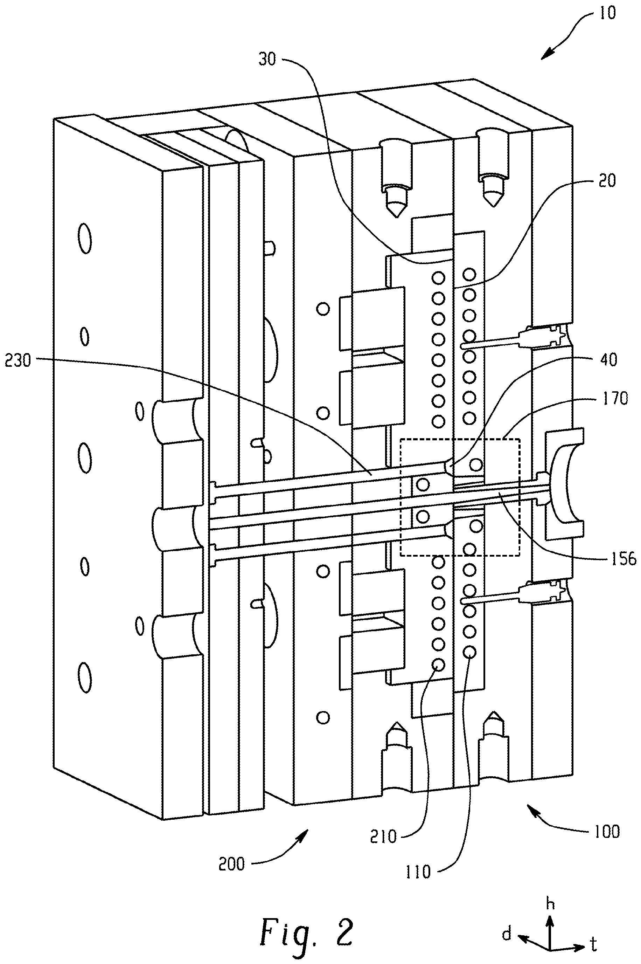

FIG. 1 is an illustration of a stationary half 100 and a moving half 200 of an injection molding tool 10 and a part 300 formed therebetween. As shown in FIG. 1, the elements of the injection molding tool 10 are separated. The stationary half 100 can include an injection plate 120 and an injection load plate 140. The moving half 200 can include an ejector plate 220 and an ejector load plate 240. The stationary half 100, the moving half 200, or both can be in mechanical communication with a presser (e.g., clamp). The presser can move the stationary half 100, the moving half 200, or both together, such that a stationary half mold surface 20 (or perimeter thereof) (e.g., a resin surface) and a moving half mold surface 30 (or perimeter thereof) can directly contact one another forming a molding cavity therebetween. Thus, the presser can act to close the tool during the formation of a part 300. The stationary half 100 can include a locator ring opening 150 extending through a thickness dimension t of the stationary half 100 to form a sprue passage 156 (FIG. 2). The cross-sectional shape of the sprue passage 156, the cross-sectional flow area of the sprue passage 156, or a combination including at least one of the foregoing can vary along the its thickness dimension.

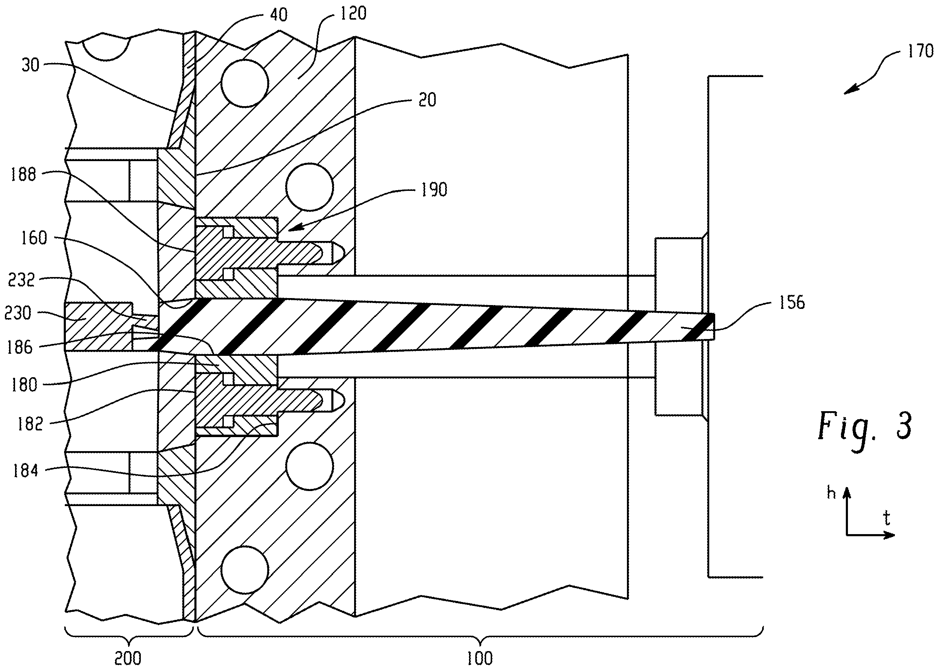

FIG. 2 is an illustration of the injection molding tool 10 of FIG. 1 in a closed position, where the stationary half 100 and the moving half 200 have been brought together to form a molding cavity 40 therebetween. A portion of the surfaces of the molding cavity 40 can be formed by the stationary half mold surface 20 and the moving half mold surface 30. The stationary half 100 can include injection cooling passages 110 which can be in thermal communication with the stationary half mold surface 20. The moving half 200 can include ejector cooling passages 210 which can be in thermal communication with the moving half mold surface 30. Once the molding material is injected into the molding cavity 40 it can be cooled by the heat capacity of the injection molding tool 10, by a fluid flowing through the injection cooling passages 110, by a fluid flowing through the ejector cooling passages 210, or a combination comprising at least one of the foregoing. The moving half 200 can include an ejector pin 230. Section 170 of the injection molding tool 10 is shown in detail in FIG. 3.

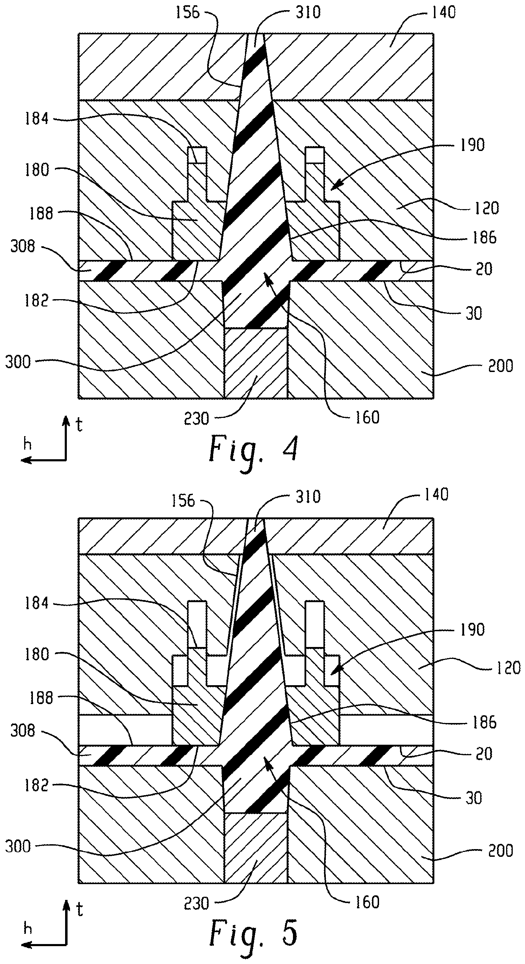

Turning now to FIGs 3-5, FIG. 3 is an illustration of section 170 of the injection molding tool 10 of FIG. 2, FIG. 4 is an illustration of an injection molding tool 10 having an ejection block 180 in the closed position, and FIG. 5 is an illustration of the injection molding tool 10 of FIG. 4 as the tool is opening.

The injection molding tool 10 can include an ejection block 180. The sprue passage 156 can extend through the stationary half 100. The sprue passage 156 can extend through the ejection block 180. An ejection block cavity 190 can be formed in the stationary half 100 (e.g., within the injection plate 120). The ejector block cavity 190 can be disposed adjacent to the sprue passage 156, the molding cavity 40, or both. A portion of the ejection block 180 can movably fit within (e.g., tightly fit within the cavity while still being capable of moving in and out, such as a piston and cylinder) of the ejector block cavity 190. The ejection block 180 can include a mold contact surface 182. The mold contact surface 182 can form a portion of the stationary half mold surface 20, against which a surface of the part 300 can directly contact during the molding operation.

The ejection block 180 can include a pressured surface 184. The pressured surface 184 of the ejection block 180 can oppose the mold contact surface 182. The pressured surface 184 can be in operable communication with a fluid, a mechanical device (e.g., a spring, pin, and the like), or a combination including at least one of the foregoing which can act on the ejection block 180 providing a motive force relative to the stationary half 100. A portion of the ejection block 180 can be moved into or out of the ejector block cavity 190. For example, when the injection molding tool 10 is not in the closed position (e.g., FIG. 5) the ejection block 180 can be moved away from the stationary half 100 (e.g., out of the ejector block cavity 190) such that only a portion of the ejection block 180 is disposed within the ejector block cavity 190. The ejection block 180 can press the part 300 (e.g., a runner 308 portion, a sprue 310 portion, or both of part 300) away from the stationary half mold surface 20 by this relative movement. The ejection block 180, ejector block cavity 190, or both can include a mechanical seal there between which can reduce or eliminate movement of molding material into, or movement of fluid (e.g., pneumatic fluid, hydraulic fluid, or the like) out of the ejector block cavity 190. A coating, e.g., a lubricant coating, can be present between the ejection block 180 and the ejector block cavity 190 to prevent scratching or shearing during mold movement.

The mold contact surface 182 can include a sprue contact surface 186 which can form a portion of a wall of the sprue passage 156 during the injection cycle and can be in contact with the part 300 during molding. The mold contact surface 182 can include a runner contact surface 188 which can extend from the sprue opening 160 along at least a portion of the stationary half mold surface 20. The runner contact surface 188 can be adjacent to a portion of a runner 308 when the part 300 is formed in the molding cavity 40. In an embodiment, the sprue passage 156 can pass through the ejection block 180 and the sprue opening 160 can be formed by the ejection block 180.

Once the molding material has cooled in the molding cavity 40, the part 300 can be ejected. The use of the ejection block 180 can reduce the cooling duration. The use of the ejection block 180 can reduce the extent that the part is to be cooled prior to ejection in comparison to a molding tool without an ejection block 180. For example, a part made from the injection molding tool 10 can be ejected when overall cooling of the part is at a level of less than 80%, for example, less than 70%, for example, less than 60%. A cooling criteria for part 300 prior to ejection from the tool when using an ejection block 180 as described herein can result in a shorter hold duration (e.g., when the tool is closed and the part 300 is cooling) than when an ejection block 180 is not used. A cooling criteria can include reaching a threshold temperature at one or more selected measuring points of the part 300 (e.g., temperature of the part 300 surface), reaching a threshold temperature of a fluid at one or more selected measuring points in the cooling passages 110, 210, reaching a threshold temperature of a mold section at one or more selected measuring points (e.g., injection plate 120, ejector plate 220), the material of the part reaching a threshold viscosity, or a combination including at least one of the foregoing. A threshold temperature can include any temperature. The threshold temperature (e.g., ejectable temperature) can be a temperature below the heat deflection temperature (HDT) of the molding material of the part 300, e.g., 1 °C to 45 °C below HDT, or, 1 °C to 30 °C below HDT, or 1 °C to 10 °C below HDT. The threshold temperature can be a temperature below the Vicat temperature of the molding material of the part 300, e.g., 1 °C to 45 °C below the Vicat temperature, or, 1 °C to 30 °C below the Vicat temperature, or 1 °C to 10 °C below the Vicat temperature. Using an ejection block 180 can allow the hold duration for a part to be reduced.

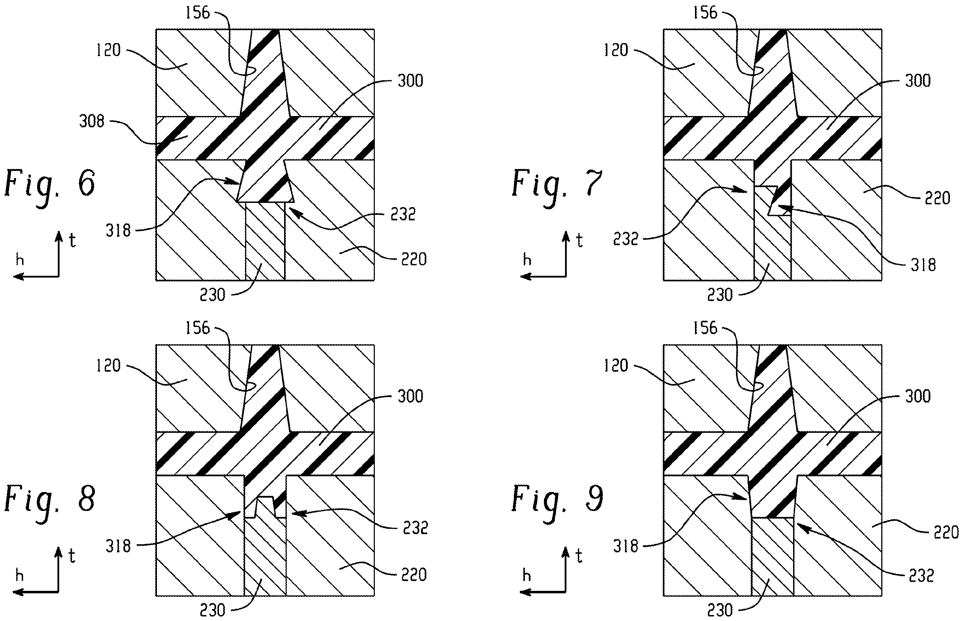

The injection molding tool 10 can include an ejector pin 230. The ejector pin 230 can include an ejector pin tip end 232 which can form a surface of the molding cavity 40. The ejector pin tip end 232, a portion of the ejector plate 220 adjacent the ejector tip end 232 or both can include an undercut 318. The undercut 318 can include any shape. As illustrated in FIG. 6, the undercut 318 can include a converging shape. As illustrated in FIG. 7, the undercut 318 can include a zig-zag interface. As illustrated in FIG. 8, the undercut 318 can include a notched interface. As illustrated in FIG. 9, the undercut 318 can include a diverging shape. The undercut 318 can be shaped to increase the contact area between the part 300 and the ejector pin 230, between the part 300 the ejector plate 220, or between the part 300 and the ejector pin and between the part 300 and the ejector pin 230 in comparison to the planar interface. For example, FIG. 6 illustrates an undercut 318 having a converging shape formed in the ejector plate 220 which can converge from the ejector tip end 232 to the runner 308. A shape of the ejector pin 230 can be oriented such that when the tool is opened the part 300 can fall away from the ejector pin 230 (e.g., a vertical notch that allows the part 300 to move in the direction of gravity when the pin is moved away from the ejector plate 220).

The ejector pin 230 can be located adjacent to any portion of the part 300. The ejector pin 230 can be located adjacent the runner 308. The ejector pin 230 can be located opposite the sprue passage 156. The ejector pin 230 can hold a part 300 against the moving half mold surface 30 while the tool is opened. When the sections are separated, such as when the tool is transitioning from the closed position to the open position, the part 300 is held against the moving half 200 (e.g., against the moving half mold surface 30). The ejector pin 230 and the ejection block 180 can cooperate to separate part 300 from the stationary half 100 when the tool is opened. The ejector pin 230 can be moved relative to the moving half 200 to separate the part 300 from the moving half 200 (e.g., from the moving half mold surface 30 after the tool is opened).

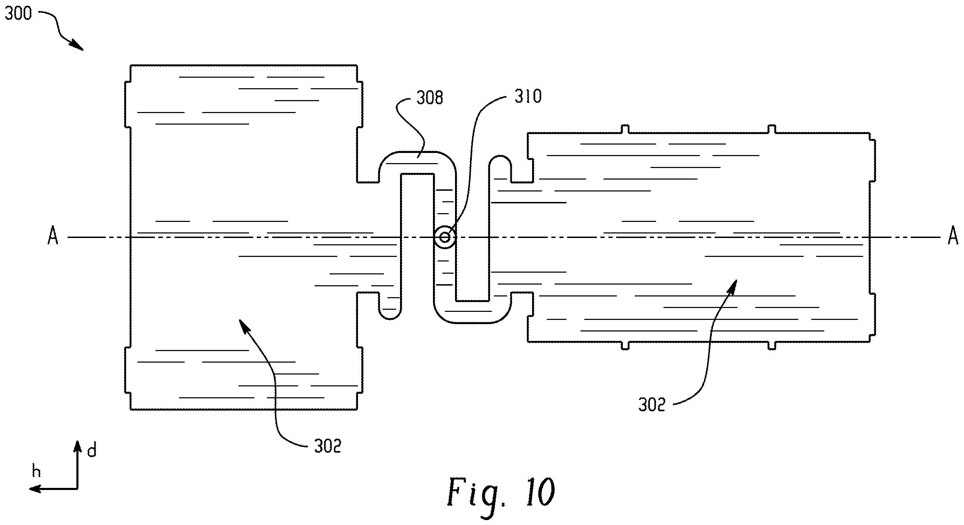

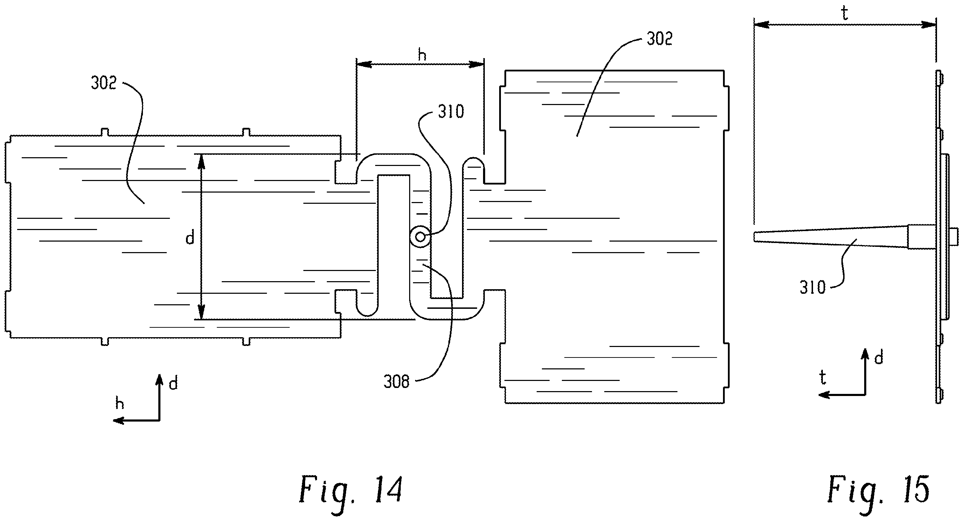

FIG. 10 is a top view of an illustration of the part 300 molded in the injection molding tool of FIGs. 1-3. The part 300 includes two sub-parts 302 formed on opposite sides of a shot distributing sprue 310 and runner 308. The shot distribution system includes a sprue 310 and a runner 308 interconnecting the sprue 310 and the sub parts 302. The longest dimension of the sprue 310 and the longest dimension of the runner 308 can extend orthogonal to one another. For example, the longest dimension of the sprue 310 can extend in the t dimension (see FIG. 15) while the longest dimension of the runner 308 can extend in the *d* or *h* dimensions (see FIG. 14) in the accompanying figures. As illustrated in FIG. 15, the sprue 310 has the longest dimension in the t dimension, while FIG. 14 illustrates that the runner can have the longest dimension in the *d* or *h* dimensions. The runner 308 can have a larger flow area than the part 300. For example, the largest flow area can be at the junction of runner 308 and sprue 310.

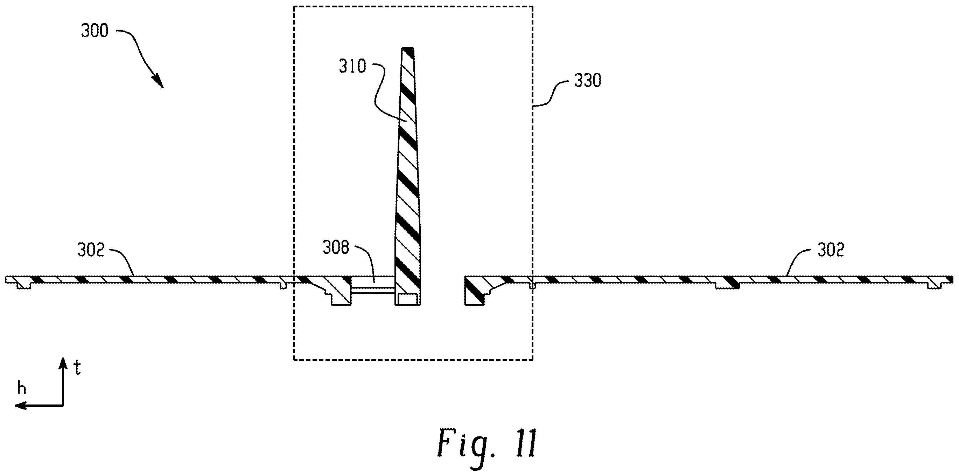

FIG. 11 is a cross-sectional view of the part 300 along the A-A cross section of FIG. 10. The sprue 310 extends orthogonal to the subparts 302.

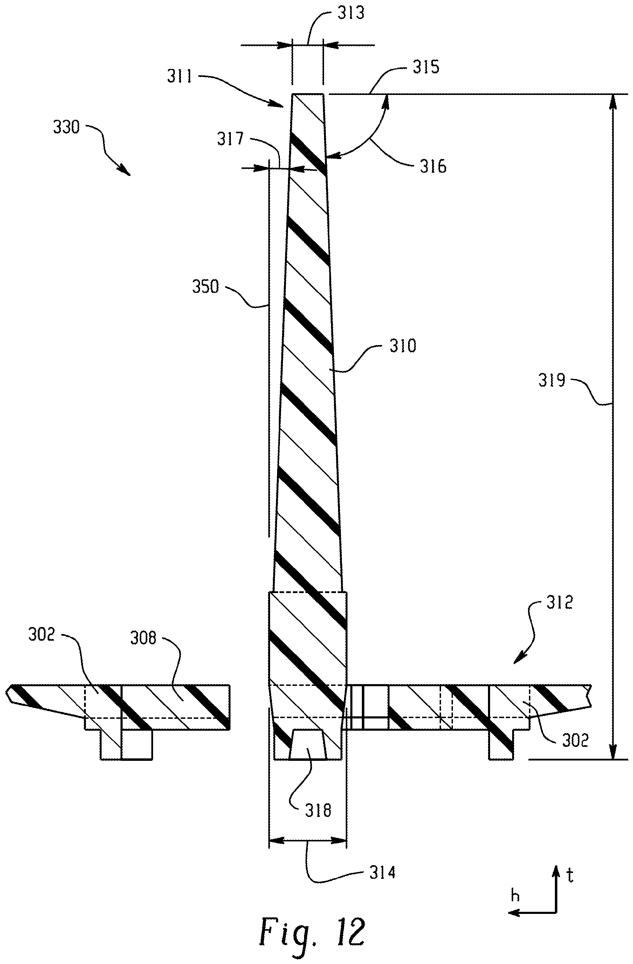

FIG. 12 is a detailed view of the section 330 of the part 300 of FIG. 11. The section 330 includes the sprue 310, runner 308, and a portion of the subparts 302. The sprue 310 can include an injection end 311 and a part end 312. The sprue 310 can have any shape. The sprue can have a conical shape to correspond with a nozzle of the injection molding machine. The sprue 310 can have a sprue length 319. The sprue 310 can have an injection end width 313. The sprue 310 can have a sprue end width 314. The injection end width 313 and the sprue end width 314 can be measured in a plane orthogonal to the sprue length 319, e.g., measured along the *h* dimension. The injection end width 313 can be less than the sprue end width 314. The sprue 310 can be widest at a cross-section between the injection end 311 and the part end 312, such as at a point which was formed within the sprue opening 160 during the molding operation. A surface of the sprue 310 can extend from the injection end 311 at an angle 316 which is less than to 90° measured relative to a cross-sectional plane 315 orthogonal to the length 319 of the sprue, for example the angle can be from 75° to 90°, or, 85° to 90°. The flow area of the runner 308 (e.g., measured in the *t-d* plane) can be less than the flow area of the sprue 310 (e.g., measured in the *h-d* plane). The sprue 310 can include an undercut 318. The undercut 318 can include any shape, such as those illustrated in FIGs. 6 to 9.

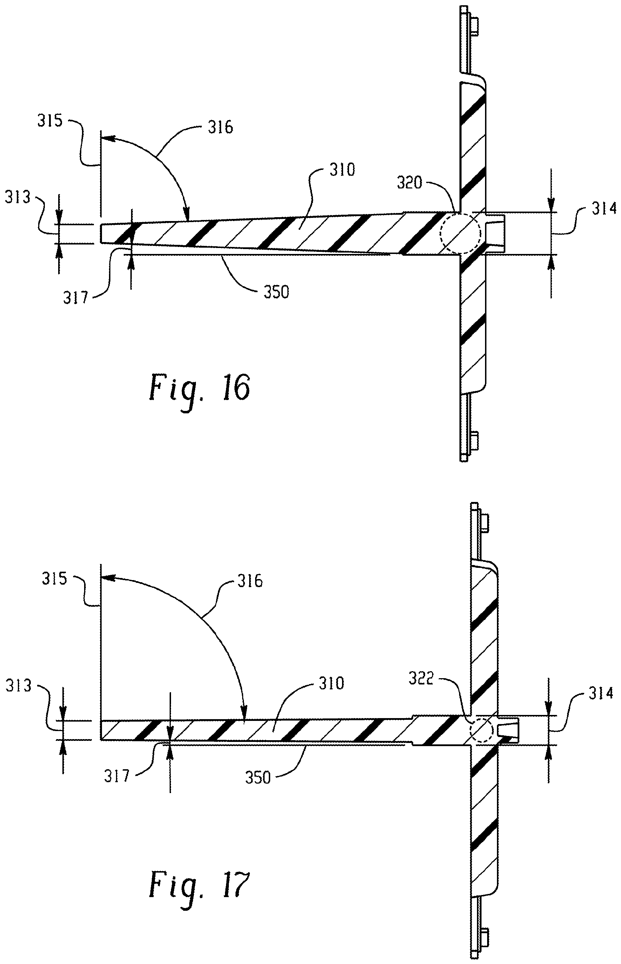

A wall of the sprue passage 156 (forming the wall of the sprue 310) can extend at a draft angle 317 of less than 10° relative to a theoretical cylinder wall 350 which extends from the sprue opening 160 to the locator ring opening 150 of a stationary half 100, for example, the draft angle 317 can be 1° to 10°, or 1° to 5°. FIGs. 16 and 17 illustrate the sprue 310 where the draft angle 317 in FIG. 16 is reduced as compared to FIG. 12 and wherein the draft angle 317 in FIG. 17 is reduced as compared to FIG. 12 and FIG. 16. As also illustrated in FIG. 16 and FIG. 17, sprue end width 314 can be reduced with the injection molding tool 10 as described herein. As demonstrated in FIG. 17, a smaller sprue end with 314 (e.g., sprue diameter 322) with a corresponding smaller draft angle 317 can produce the same injection end width 313 as compared to FIG. 16 (see larger sprue diameter 320 in FIG. 16). A smaller draft angle 317 can lead to a reduction in sprue end width 314, which can mean less material needed to fill the mold, shorter cooling time, and therefore, shorter overall cycle time.

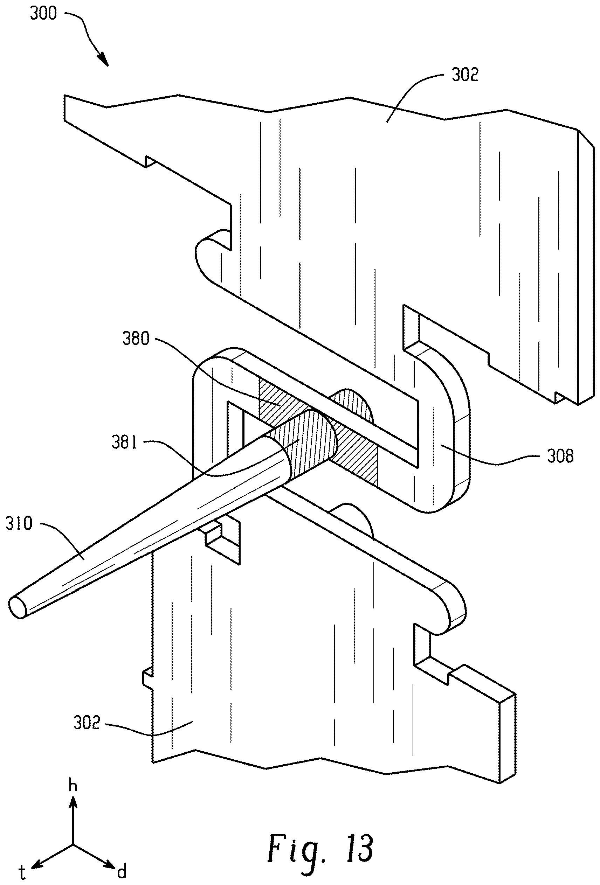

FIG. 13 is an illustration of the part 300 in a three dimensional space. The part 300 can include ejection block runner contact surface 380, where the ejection block 180 was in contact with the part 300 during molding. The part 300 can include an ejection block sprue contact surface 381 where the ejection block 180 was in contact with the part 300 during molding. The ejection block runner contact surface 380 can extend across a portion of a surface of the runner 308. The ejection block sprue contact surface 381 can extend over a portion of a surface of a wall of the sprue 310. The walls of the sprue passage 156 can diverge as it extends to the sprue opening 160 and the sprue passage 156 can extend through the ejection block 180 such that an ejection block 180 can push against a wall of the sprue 310 (e.g., along the t dimension in the accompanying figures) when the part 300 is to be ejected from the tool. The ejection block runner contact surface 380 and the ejection block sprue contact surface 381 can be removed from the sub parts 302 along with the sprue 310 and runner 308 during finishing operations performed on part 300. Such operations can include any material removal process, e.g., cutting, machining, grinding, filing, sanding, and the like. The runner 308 can be broken from the part 300 when the part is ejected from the tool.

The molding material can be any material that can be flowed into the molding cavity 40. For example, the molding material can include a polymer, including, but not limited to amorphous, semi-crystalline, crystalline, elastomers, etc. For example, a polymer can include thermoplastic materials such as polybutylene terephthalate (PBT); polypropylene (PP); polyethylene (PE) (e.g., high density polyethylene (HDPE), low density polyethylene (LDPE), linear low density polyethylene (LLDPE); polyamides (PA) (e.g., nylon); polyphenylene sulfide (PPS); polysulfone (e.g., polyethersulfone (PES)); polyether ketone (PEK) (e.g., polyether ether ketone (PEEK); polyester (e.g., polyethylene terephthalate (PET)); polyetherimides (PEI); acrylonitrile-butadiene-styrene (ABS); polycarbonate (PC); polycarbonate/PBT blends; polycarbonate/ABS blends; copolycarbonate-polyesters; blends of polycarbonate/polyethylene terephthalate (PET)/PBT; as well as combinations comprising at least one of the foregoing. A polymer material can include additives, e.g., an impact modifier, ultraviolet light absorber, mold release agent, anti-dripping agent, flame retardant, anti-graffiti agent, pigment, or a combination including at least one of the foregoing. The molding materials can include reinforcing materials, such as glass, carbon, basalt, aramid, or combination comprising at least one of the foregoing. Reinforcing materials can include cut, chopped, strand fibers, or a combination comprising at least one of the foregoing.

A molding process using the molding tool disclosed herein can include moving a stationary half 100 and the moving half 200 of an injection molding tool 10 together, forming a molding cavity 40 between the stationary half 100 and the moving half 200, forming a molding cavity 40 between the stationary half mold surface 20 and the moving half mold surface 30, or a combination including at least one of the foregoing.

The molding process can include heating a molding cavity 40, heating a sprue passage 156, heating a runner passage, heating a part forming mold cavity, heating a moldable material, frictionally heating a moldable material with a ram or screw, or a combination including at least one of the foregoing.

The molding process can include injecting a moldable material into the molding cavity 40 at an injection pressure of 1 MegaPascal (MPa) to 400 MPa, pressing the stationary half 100 and the moving half 200 together and pressing the moldable material into the mold cavity. The molding process can include cooling a portion of a part 300 until a cooling criteria is satisfied, cooling a part 300 until a surface temperature of the part 300 decreases below an ejectable temperature, cooling a part 300 while a molding tool is closed, holding a molding tool in a closed position for a specified time duration, holding a molding tool in a closed position until a cooling criteria has been satisfied, or a combination including at least one of the foregoing.

The molding process can include separating the stationary half 100 and the moving half 200, separating the stationary half mold surface 20 and the moving half mold surface 30 to open the molding cavity 40, moving the stationary half mold surface 20 and the moving half mold surface 30 away from one another, ejecting a part 300 from a molding tool with an ejection block 180 at an ejection pressure of 1 Pascal (Pa) to 100 Pascals, moving an ejection block 180 within an ejection block cavity 190 where an mold contact surface 182 extends away from a stationary half mold surface 20, pressing a pressured surface 184 of an ejection block 180 with a fluid, pressing a pressured surface 184 of an ejection block 180 with a mechanical device, pushing a part 300 along an ejection block runner contact surface 380 with the runner contact surface 188 of an ejection block 180, pushing a part 300 along an ejection block sprue contact surface 381 with the sprue contact surface 186 of an ejection block 180, pushing a part 300 with more than one ejection block 180, or a combination including at least one of the foregoing.

The molding process can include holding a part 300 in direct contact with the moving half mold surface 30 by interlocking the part 300 onto the ejector plate 220 with an undercut 318, pushing a part 300 away from a moving half mold surface 30 with a ejector pin 230, pushing a part 300 with more than one ejector pin 230, or a combination including at least one of the foregoing. The mold process can include can include holding a part 300 in direct contact with the moving half mold surface 30 by interlocking the part 300 onto the ejector plate 220 without an undercut, pushing a part 300 away from a moving half mold surface 30 with a ejector pin 230, pushing a part 300 with more than one ejector pin 230, or a combination including at least one of the foregoing

### EXAMPLE

The injection tool of FIG. 1 was used with a shot including polycarbonate, acrylonitrile-butadiene-styrene (ABS), and glass filler to mold the part 300 with and without the use of the ejection block 180 to push the part from the stationary half 100 of the tool. The shot composition included 15 weight percent glass filler. The time to part ejection for the part 300 when the ejection block 180 was not used was 22 seconds. The time to part ejection for the part 300 when the ejection block 180 was used was 18 seconds. Thus, the time to part ejection was reduced by 18.2 % with the use of the ejection block 180. The other cycle time for the molding process was 13.34 seconds (e.g., to close the tool, inject the shot, and open the tool), which was unchanged. In this example the total cycle time was reduced from 35.34 seconds to 31.34 seconds upon the use of the ejection block 180 resulting in an 11.3 % cycle time reduction. Ejection can be accomplished with the use of spring tension poles (e.g., coil springs).

The objectives of the invention are achieved by the apparatus according to the appended claim 1 and the method for forming a part in an injection mold according to the appended claim 13. Preferred embodiments are disclosed in the dependent claims.

## Claims

1. An injection molding apparatus (10) comprising:
a stationary half (100) comprising:
a sprue opening (160) extending through a thickness of the stationary half (100) forming a sprue passage (156);
a stationary half mold surface (20); and
an ejection block cavity (190) disposed adjacent to the sprue opening (160);
a moving half (200) disposed opposite the stationary half (100) and comprising a moving half mold surface (30), wherein the stationary half mold surface (20) and the moving half mold surface (30) face one another;
a presser in mechanical communication with, and configured to move, the stationary half (100), the moving half (200), or both together to form a molding cavity (40) between the stationary half mold surface (20) and the moving half mold surface (30);
and wherein an ejection block (180) comprises a mold contact surface (182) forming a portion of the stationary half mold surface (20), wherein at least a portion of the ejection block (180) is disposed within an ejection block cavity (190), and wherein the ejection block (180) is configured to movably fit within the ejection block cavity (190); and
an injector for introducing a material to be molded through the sprue passage (156) and into the molding cavity (40);
**characterized in that** the material can be pushed from the molding cavity (40) by the ejection block (180) following a molding operation without separating material formed in the sprue passage (156) from material formed within the molding cavity (40);
wherein the ejector pin (230) or the ejector pin cavity, or the ejector pin (230) and the ejector pin cavity comprise an undercut (318) or cooperate to form an undercut (318) configured to hold the material adjacent to the moving half (200) when the stationary half (100) and the moving half (200) are separated; and
wherein the ejector pin (230) is configured to push the material away from the moving half (200).

2. The injection molding apparatus (10) of Claim 1, wherein the stationary half (100) comprises a stationary half mold cavity wherein at least a portion of the stationary half mold surface (20) is disposed within the stationary half mold cavity.

3. The injection molding apparatus (10) of Claim 1 or Claim 2, wherein the moving half (200) comprises a moving half mold cavity and at least a portion of the moving half mold surface (30) is disposed within the moving half mold cavity.

4. The injection molding apparatus (10) of any of the preceding claims, wherein the sprue passage (156) extends through the ejection block (180).

5. The injection molding apparatus (10) of any of the preceding claims, wherein the molding cavity (40) comprises a part forming space and a runner space interconnecting the sprue passage (156) and the part forming space.

6. The injection molding apparatus (10) of any of the preceding claims, wherein the mold contact surface (182) of the ejection block (180) further comprises a sprue contact surface (186) extending from the sprue opening (160) along at least a portion of a wall of the sprue passage (156), and a runner contact surface (188) extending from the sprue opening (160) along at least a portion of the stationary half mold surface (120).

7. The injection molding apparatus (10) of any of the preceding claims, wherein a wall of the sprue passage (156) extends from the sprue opening (160) at an angle (316) of less than or equal to 90° measured relative to a cross-sectional plane (315) of the sprue opening (160).

8. The injection molding apparatus (10) of any of the preceding claims, wherein the sprue passage (156) has a conical shape that converges as it extends from the sprue opening (160) to a locator ring opening, and wherein a wall of the sprue passage (156) extends at a draft angle of less than or equal to 5° measured relative to the wall of a theoretical cylindrical sprue passage (350) extending from the sprue opening (160).

9. The injection molding apparatus (10) of any of the preceding claims, wherein the ejection block (180) further comprises a pressured surface (184) and the ejection block (180) is moved relative to the stationary half (100) by pressuring the pressured surface (184) with a fluid or a mechanical device, or a combination comprising at least one of the foregoing.

10. The injection molding apparatus (10) of any of the preceding claims, wherein the ejector cavity (190), or the ejection block (180), or the ejector cavity (190) and the ejection block (180) further comprise a seal therebetween for retaining a fluid within at least a portion of the ejection block cavity (190).

11. The injection molding apparatus (10) of any of the preceding claims, wherein the moving half further (200) comprises an ejector pin cavity and an ejector pin (230) configured to movably fit within the ejector pin cavity, wherein at least a portion of the moving half mold surface (30) is disposed within the ejector pin cavity.

12. The injection molding apparatus (10) of any of the preceding claims, wherein the injection molding apparatus (10) is a cold runner injection molding apparatus or a semi-cold runner injection molding apparatus.

13. A method for forming a part (300) in an injection mold comprising:
heating a polymer material to a temperature greater than or equal to a polymer glass transition temperature;
**characterized in that** the polymer material is injected into the injection molding apparatus (10) of any of the preceding claims while pressing together the stationary half mold surface (20) and the moving half mold surface (30) to form the molding cavity (40);
separating the stationary half mold surface (20) and the moving half mold surface (30); and
moving the ejection block (180) relative to the stationary half (100) thereby pushing the part (300) away from the stationary half molding surface (20) and;
ejecting the part from the injection molding apparatus (10), wherein the moving further comprises pulling the part with an ejector pin (230) extending from the moving half (200).

14. The method of Claim 13, wherein the part (300) is pulled from the injection mold at an overall cooling level of less than 80%.

15. The method of any of Claims 13-14, wherein the polymeric material is selected from polypropylene; polyethylene; polyamide; polysulfone; polybutylene terephthalate; polyetherimides; acrylonitrile-butadiene-styrene; polycarbonate; polycarbonate/ polybutylene terephthalate blends; polycarbonate/ acrylonitrile-butadiene-styrene blends; copolycarbonate-polyesters; blends of polycarbonate/polyethylene terephthalate/ polybutylene terephthalate; or a combination comprising at least one of the foregoing.

## Patentansprüche

1. Spritzgießvorrichtung (10), umfassend:
eine stationäre Hälfte (100) umfassend:
eine Angussöffnung (160), die sich einen Angussdurchgang (156) bildend, durch eine Dicke der stationären Hälfte (100) erstreckt;
eine stationäre Formhälftenoberfläche (20); und
eine Auswerferblockkavität (190), welche benachbart zu der Angussöffnung (160) angeordnet ist (160);
eine bewegbare Hälfte (200), die gegenüber der stationären Hälfte (100) angeordnet ist, und
eine bewegbare Formhälftenoberfläche (30) umfasst, wobei die stationäre Formhälftenoberfläche (20) und die bewegbare Formhälftenoberfläche (30) sich gegenüberliegen;
einen Presser in mechanischer Verbindung mit der stationären Hälfte (100), der bewegbaren Hälfte (200), oder beiden, und eingerichtet, die stationäre Hälfte (100), die bewegbare Hälfte (200), oder beide gemeinsam zur Ausbildung einer Formkavität (40) zwischen der stationären Formhälftenoberfläche (20) und der bewegbaren Formhälftenoberfläche (30) zu bewegen; und wobei
ein Auswerferblock (180) eine Formkontaktoberfläche (182) umfasst, welche einen Abschnitt der stationären Formhälftenoberfläche (20) bildet, wobei wenigstens ein Abschnitt des Auswerferblocks (180) innerhalb einer Auswerferblockkavität (190) angeordnet ist, und
wobei der Auswerferblock (180) eingerichtet ist, bewegbar in die Auswerferblockkavität (190) zu passen; und
einen Einspritzer zur Einbringung von spritzzugießendem Material durch den Angussdurchgang (156) und in die Formkavität (40);
**dadurch gekennzeichnet, dass**
das Material von der Formkavität (40) durch den Auswerferblock (180) nachfolgend einem Spritzbetrieb ohne Trennen des in dem Angussdurchgang (156) gebildeten Materials von dem in der Formkavität (40) geformten Material gedrückt werden kann;
wobei der Auswerferstift (230) oder die Auswerferstiftkavität, oder der Auswerferstift (230) und die Auswerferstiftkavität einen Hinterschnitt (318) umfassen oder zur Ausbildung eines Hinterschnitts (318) zusammenwirken, welcher Hinterschnitt (318) eingerichtet ist, das Material benachbart zu der bewegbaren Hälfte (200) zu halten, wenn die stationäre Hälfte (100) und die bewegbare Hälfte (200) getrennt sind; und
wobei der Auswerferstift (230) eingerichtet ist, das Material weg von der bewegbaren Hälfte (200) zu drücken.

2. Spritzgießvorrichtung (10) nach Anspruch 1, wobei die stationäre Hälfte (100) eine stationäre Formhälftenkavität umfasst, wobei wenigstens ein Abschnitt der stationären Formhälftenoberfläche (20) innerhalb der stationären Formhälftenkavität angeordnet ist.

3. Spritzgießvorrichtung (10) nach Anspruch 1 oder 2, wobei die bewegbare Hälfte (200) eine bewegbare Formhälftenkavität umfasst und wenigstens ein Abschnitt der stationären Formhälftenoberfläche (30) innerhalb der bewegbaren Formhälftenkavität angeordnet ist.

4. Spritzgießvorrichtung (10) nach einem der vorhergehenden Ansprüche, wobei der Angussdurchgang (156) sich durch den Auswerferblock (180) erstreckt.

5. Spritzgießvorrichtung (10) nach einem der vorhergehenden Ansprüche, wobei die Formkavität (40) einen Teilausbilderaum und einen Angussverteilerraum, welcher den Teilausbilderaum und den Angussdurchgang (156) miteinander verbindet, umfasst.

6. Spritzgießvorrichtung (10) nach einem der vorhergehenden Ansprüche, wobei die Formkontaktoberfläche (182) des Auswerferblocks (180) ferner eine Angusskontaktoberfläche (186), welche sich von der Angussöffnung (160) entlang wenigstens eines Abschnitts einer Wandung des Angussdurchgangs (156) erstreckt, und eine Angussverteilerkontaktoberfläche, welche sich von der Angussöffnung (160) entlang wenigstens eines Abschnitts der stationären Formhälftenoberfläche (120) erstreckt, umfasst.

7. Spritzgießvorrichtung (10) nach einem der vorangehenden Ansprüche, wobei eine Wandung des Angussdurchgangs (156) sich von der Angussöffnung (160) in einem Winkel (316) von weniger oder gleich 90° gemessen relativ zu einer Querschnittsebene (315) der Angussöffnung (160) erstreckt.

8. Spritzgießvorrichtung (10) nach einem der vorhergehenden Ansprüche, wobei der Angussdurchgang (156) eine konische Form aufweist, welche während ihrer Erstreckung von der Angussöffnung (156) zu einer Zentrierringöffnung konvergiert, und wobei eine Wandung des Angussdurchgangs (156) in einer Entformungsschräge von weniger als oder gleich 5° gemessen relativ zu der Wandung eines sich von der Angussöffnung (160) erstreckenden theoretischen zylindrischen Angussdurchgangs (350) erstreckt.

9. Spritzgießvorrichtung (10) nach einem der vorhergehenden Ansprüche, wobei der Auswerferblock (180) ferner eine durckbeaufschlagte Oberfläche (184) umfasst und der Auswerferblock (180) bewegt relativ zu der stationären Hälfte (100) durch Druckbeaufschlagen der durckbeaufschlagten Oberfläche (184) mit einem Fluid oder einem mechanischen Gerät, oder einer Kombination wenigstens eines der Vorgenannten ist.

10. Spritzgießvorrichtung (10) nach einem der vorhergehenden Ansprüche, wobei die Auswerferkavität (190) oder der Auswerferblock (180), oder die Auswerferkavität (190) und der Auswerferblock (180) ferner eine Dichtung dazwischen zum Zurückhalten eines Fluids innerhalb wenigstens eines Abschnitts der Auswerferblockkavität (190) umfassen.

11. Spritzgießvorrichtung (10) nach einem der vorhergehenden Ansprüche, wobei die bewegbare Hälfte (200) ferner eine Auswerferstiftkavität und einen Auswerferstift (230), welcher eingerichtet ist, bewegbar in der Auswerferstiftkavität zu sein, umfasst, wobei wenigstens ein Abschnitt der bewegbaren Formhälftenoberfläche (30) innerhalb der Auswerferstiftkavität angeordnet ist.

12. Spritzgießvorrichtung (10) nach einem der vorhergehenden Ansprüche, wobei die Spritzgießvorrichtung eine Kaltkanalspritzgießvorrichtung oder eine Halbkaltkanalspritzgießvorrichtung ist.

13. Verfahren zur Ausbildung eines Teils (300) durch Spritzgießen, umfassend:
Erwärmen eines Polymermaterials auf eine Temperatur oberhalb oder gleich einer Polymerglasübergangstemperatur;
**dadurch gekennzeichnet, dass** das Polymermaterial in die Spritzgießvorrichtung (10) nach einem der vorhergehenden Ansprüche eingespritzt wird, während die stationäre Formhälftenoberfläche (20) und die bewegbare Formhälftenoberfläche (30) zur Ausbildung der Formkavität (40) zusammengepresst werden;
Trennen der die stationären Formhälftenoberfläche (20) und der bewegbaren Formhälftenoberfläche (30); und
Bewegen des Auswerferblocks (180) relativ zu der stationären Hälfte (100), wobei das Teil (300) von der stationären Formhälftenoberfläche (20) weggedrückt wird;
Auswerfen des Teils aus der Spritzgießvorrichtung, wobei das Bewegen weiter ein Ziehen des Teils mit einem Auswerferstift (230), welcher sich von der bewegbaren Hälfte (200) erstreckt, umfasst.

14. Verfahren nach Anspruch 13, wobei das Teil (300) von der Spritzform bei einem Gesamtkühlgrad von weniger als 80% gezogen wird.

15. Verfahren nach einem der Ansprüche 13 oder 14, wobei das Polymermaterial gewählt wird aus: Polypropylen, Polyethylen, Polyamid, Polysulfon, Polybutylenterephthalat, Polyetherimid; Acrylnitril-Butadien-Styrol, Polycarbonat, Polycarbonat / Polybutylenterephthalat-Blend; Polycarbonat / Acrylnitril-Butadien-Styrol-Blends; Copolycarbonat-Polyestern; Blends aus Polycarbonat / Polyethylenterephthalat / Polybutylenterephthalat; oder einer Kombination wenigstens eines der Vorgenannten.

## Revendications

1. Appareil de moulage par injection (10) comprenant :
une moitié stationnaire (100) comprenant :
une ouverture de carotte (160) s'étendant à travers une épaisseur de la moitié stationnaire (100) et formant un passage de carotte (156) ;
une surface de demi-moule stationnaire (20) ; et
une cavité de bloc d'éjection (190) disposée à côté de l'ouverture de carotte (160) ;
une moitié mobile (200) disposée en face de la moitié stationnaire (100) et comprenant une surface de demi-moule mobile (30), la surface de demi-moule stationnaire (20) et la surface de demi-moule mobile (30) se faisant face ;
une presse en communication mécanique avec la moitié stationnaire (100), la moitié mobile (200), ou les deux ensemble, et configurée pour la ou les déplacer pour former une cavité de moulage (40) entre la surface de demi-moule stationnaire (20) et la surface de demi-moule mobile (30) ; et
dans lequel un bloc d'éjection (180) comprend une surface de contact de moule (182) formant une partie de la surface de demi-moule stationnaire (20), au moins une partie du bloc d'éjection (180) étant disposée à l'intérieur d'une cavité de bloc d'éjection (190), et le bloc d'éjection (180) étant configuré pour se loger de manière mobile à l'intérieur de la cavité de bloc d'éjection (190) ; et
un injecteur pour introduire un matériau à mouler à travers le passage de carotte (156) et dans la cavité de moulage (40) ;
**caractérisé en ce que**
le matériau peut être poussé hors de la cavité de moulage (40) par le bloc d'éjection (180) après une opération de moulage sans séparer le matériau formé dans le passage de carotte (156) du matériau formé dans la cavité de moulage (40) ;
la broche d'éjecteur (230) ou la cavité de la broche d'éjecteur, ou la broche d'éjecteur (230) et la cavité de la broche d'éjecteur comprenant une contre-dépouille (318) ou coopérant pour former une contre-dépouille (318) configurée pour maintenir le matériau adjacent à la moitié mobile (200) lorsque la moitié stationnaire (100) et la moitié mobile (200) sont séparées ; et
la broche d'éjecteur (230) étant configurée pour repousser le matériau hors de la moitié mobile (200).

2. Appareil de moulage par injection (10) selon la revendication 1, dans lequel la moitié stationnaire (100) comprend une cavité de demi-moule stationnaire, au moins une partie de la surface de demi-moule stationnaire (20) étant disposée à l'intérieur de la cavité de demi-moule stationnaire.

3. Appareil de moulage par injection (10) selon la revendication 1 ou la revendication 2, dans lequel la moitié mobile (200) comprend une cavité de demi-moule mobile, et au moins une partie de la surface de demi-moule mobile (30) est disposée à l'intérieur de la cavité de demi-moule mobile.

4. Appareil de moulage par injection (10) selon l'une quelconque des revendications précédentes, dans lequel le passage de carotte (156) s'étend à travers le bloc d'éjection (180).

5. Appareil de moulage par injection (10) selon l'une quelconque des revendications précédentes, dans lequel la cavité de moulage (40) comprend un espace de formation de pièce et un espace de canal d'injection reliant le passage de carotte (156) et l'espace de formation de pièce.

6. Appareil de moulage par injection (10) selon l'une quelconque des revendications précédentes, dans lequel la surface de contact de moule (182) du bloc d'éjection (180) comprend en outre une surface de contact de carotte (186) s'étendant depuis l'ouverture de carotte (160) le long d'au moins une partie d'une paroi du passage de carotte (156), et une surface de contact de canal d'injection (188) s'étendant depuis l'ouverture de carotte (160) le long d'au moins une partie de la surface de demi-moule stationnaire (120).

7. Appareil de moulage par injection (10) selon l'une quelconque des revendications précédentes, dans lequel une paroi du passage de carotte (156) s'étend depuis l'ouverture de carotte (160) selon un angle (316) inférieur ou égal à 90° mesuré par rapport à un plan transversal (315) de l'ouverture de carotte (160).

8. Appareil de moulage par injection (10) selon l'une quelconque des revendications précédentes, dans lequel le passage de carotte (156) a une forme conique qui converge lorsqu'il s'étend depuis l'ouverture de carotte (160) vers une ouverture de bague de centrage, et une paroi du passage de carotte (156) s'étend selon un angle de dépouille inférieur ou égal à 5° mesuré par rapport à la paroi d'un passage de carotte cylindrique théorique (350) s'étendant depuis l'ouverture de carotte (160).

9. Appareil de moulage par injection (10) selon l'une quelconque des revendications précédentes, dans lequel le bloc d'éjection (180) comprend en outre une surface sous pression (184) et le bloc d'éjection (180) est déplacé par rapport à la moitié stationnaire (*100*) en mettant sous pression la surface sous pression (184) avec un fluide ou un dispositif mécanique, ou avec une combinaison comprenant au moins l'un de ceux-ci.

10. Appareil de moulage par injection (10) selon l'une quelconque des revendications précédentes, dans lequel la cavité d'éjecteur (190), ou le bloc d'éjection (180), ou la cavité d'éjecteur (190) et le bloc d'éjection (180) comprennent en outre un joint entre eux pour retenir un fluide à l'intérieur d'au moins une partie de la cavité de bloc d'éjection (190).

11. Appareil de moulage par injection (10) selon l'une quelconque des revendications précédentes, dans lequel la moitié mobile (200) comprend en outre une cavité de broche d'éjecteur et une broche d'éjecteur (230) configurée pour se loger de manière mobile à l'intérieur de la cavité de broche d'éjecteur, au moins une partie de la surface de demi-moule mobile (30) étant disposée à l'intérieur de la cavité de broche d'éjecteur.

12. Appareil de moulage par injection (10) selon l'une quelconque des revendications précédentes, dans lequel l'appareil de moulage par injection (10) est un appareil de moulage par injection à canaux froids ou un appareil de moulage par injection à canaux semi-froids.

13. Procédé pour former une pièce (300) dans un moule d'injection comprenant les étapes consistant à :
chauffer un matériau polymère à une température supérieure ou égale à une température de transition vitreuse du polymère ;
**caractérisé en ce que** le matériau polymère est injecté dans l'appareil de moulage par injection (10) selon l'une quelconque des revendications précédentes en pressant ensemble la surface de demi-moule stationnaire (20) et la surface de demi-moule mobile (30) pour former la cavité de moulage (40) ;
séparer la surface de demi-moule stationnaire (20) et la surface de demi-moule mobile (30) ; et
déplacer le bloc d'éjection (180) par rapport à la moitié stationnaire (100), repoussant ainsi la pièce (300) de la surface de demi-moule stationnaire (20) et
éjecter la pièce de l'appareil de moulage par injection (10), le déplacement comprenant en outre le repoussement de la pièce par une broche d'éjecteur (230) s'étendant depuis la moitié mobile (200).

14. Procédé selon la revendication 13, dans lequel la pièce (300) est retirée du moule d'injection à un niveau de refroidissement global inférieur à 80 %.

15. Procédé selon l'une quelconque des revendications 13-14, dans lequel le matériau polymère est choisi parmi le polypropylène, le polyéthylène, le polyamide, les polysulfones, le polybutylène téréphtalate, les polyétherimides, l'acrylonitrile butadiène styrène, le polycarbonate, des mélanges polycarbonate/polybutylène téréphtalate, des mélanges polycarbonate/acrylonitrile butadiène styrène, des copolycarbonate-polyesters, des mélanges polycarbonate/polyéthylène téréphtalate/polybutylène téréphtalate, ou une combinaison comprenant au moins l'un des composants précédents.
